# EUROPEAN PATENT APPLICATION

(11) **EP 4 603 744 A1**
(43) Date of publication of application: **20.08.2025**
(21) Application number: 24744621.4
(22) Date of filing: 15.01.2024
(51) Int. Cl.: F21S 2/00, G02B 5/02, G02F 1/1335, G02F 1/13357, F21Y 115/10

(54) **OPTICAL SHEET LAMINATE, BACKLIGHT UNIT, LIQUID-CRYSTAL DISPLAY DEVICE, AND INFORMATION APPLIANCE**

(30) Priority: 17.01.2023 JP 2023004856; 12.01.2024 JP 2024003051
(71) Applicant: KEIWA Incorporated, Tokyo 103-0025 (JP)
(72) Inventor: MANABE, Tomiko, Tokyo 103-0025 (JP); TSAI, Chengheng, Tokyo 103-0025 (JP)
(74) Representative: Becker Kurig & Partner Patentanwälte mbB
(86) International application number: PCT/JP2024/000817
(87) International publication number: WO 2024/154698

(57) **Abstract**

An optical sheet laminate 10 comprises: a color conversion sheet 44 which changes the wavelengths of light; and a plurality of light diffusion sheets 43 each having a plurality of recesses 105 having the shape of an approximately inverted polygonal pyramid. The color conversion sheet 44 is disposed on the lower or upper side of the plurality of light diffusion sheets 43. The plurality of light diffusion sheets 43 are equal in the surface having the plurality of recesses 105 and in arrangement directions thereof.

## Description

### Technical Field

The present disclosure relates to an optical sheet stack, a backlight unit, a liquid crystal display device, and an information apparatus.

### Background Art

Liquid crystal display devices are widely used as display devices in various information apparatuses such as smartphones and tablet terminals. As backlights of liquid crystal display devices, direct-type systems in which a light source is deployed on the back surface of a liquid crystal panel are predominantly used.

When adopting a direct-type backlight, a light-diffusing sheet on which inverted substantially polygonal pyramid-shaped recesses, for example, are formed is used to increase the brightness uniformity of the display screen by erasing an image of a light source such as an LED (Light Emitting Diode) (see Patent Literature 1).

When a light source other than a white light source (for example, a blue light source) is used as the light source of a direct-type backlight, a color conversion sheet that converts a wavelength of the light must be deployed between the light source and the display screen.

### Citation List

### Patent Literature

Patent Literature 1: Japanese Patent Application Publication No. 2010-117707

### Summary of Invention

### Technical Problem

A thin display such as a laptop computer or a tablet terminal requires a sheet stack configuration that is thin and has high brightness uniformity, but since the deployment of the light source and the positional relationships between the various optical sheets differ for each product, depending on the product, it may be impossible to obtain sufficient brightness uniformity with a conventional sheet stack configuration.

An object of the present disclosure is to provide an optical sheet stack that is easy to manufacture and can improve the brightness uniformity, as well as a backlight unit, a liquid crystal display device, and an information device using the optical sheet stack.

### Solution to Problem

To achieve the above object, an optical sheet stack according to a first aspect of the present disclosure is incorporated into a backlight unit that guides a light emitted from a plurality of point light sources to a display screen of a liquid crystal display device, the optical sheet stack including: a color conversion sheet, configured to convert a wavelength of the light; and a plurality of light-diffusing sheets, being stacked between the color conversion sheet and the display screen, and provided with a plurality of recesses having inverted substantially polygonal pyramid shape, wherein the plurality of recesses in the plurality of light-diffusing sheets have the same deployment surfaces and arrangement directions.

With the optical sheet stack according to the first aspect of the present disclosure, since the plurality of light-diffusing sheets provided with the plurality of inverted substantially polygonal pyramid-shaped recesses are stacked between the color conversion sheet and the display screen, the brightness uniformity can be improved. Moreover, since the deployment surfaces and arrangement directions of the recesses in the plurality of light-diffusing sheets are the same, manufacture is easy.

In the optical sheet stack according to the first aspect of the present disclosure, the plurality of point light sources and the plurality of recesses may be arranged in a two-dimensional matrix pattern, the plurality of recesses may be provided on light emission surfaces of the plurality of light-diffusing sheets, and the arrangement direction of the plurality of point light sources may intersect with the arrangement direction of the plurality of recesses. Thus, in a configuration in which the plurality of light-diffusing sheets, on which the plurality of inverted substantially polygonal pyramid-shaped recesses are provided in a two-dimensional matrix pattern, are stacked between the color conversion sheet and the display screen, by providing the recesses on the light emission surface of each of the light-diffusing sheets and setting the arrangement direction of the point light sources and the arrangement direction of the recesses to intersect, the brightness uniformity can be further improved.

In the optical sheet stack according to the first aspect of the present disclosure, the plurality of point light sources and the plurality of recesses may be arranged in a two-dimensional matrix pattern, the plurality of recesses may be provided on light entrance surfaces of the plurality of light-diffusing sheets, and the arrangement direction of the plurality of point light sources may intersect with the arrangement direction of the plurality of recesses. Thus, in a configuration in which the plurality of light-diffusing sheets, on which the plurality of inverted substantially polygonal pyramid-shaped recesses are provided in a two-dimensional matrix pattern, are stacked between the color conversion sheet and the display screen, by providing the recesses on the light entrance surface of each of the light-diffusing sheets and setting the arrangement direction of the point light sources and the arrangement direction of the recesses to intersect, the brightness can be improved while improving the brightness uniformity.

In order to achieve the above object, an optical sheet stack according to a second aspect of the present disclosure is incorporated into a backlight unit that guides a light emitted from a plurality of point light sources to a side of a display screen of a liquid crystal display device, the optical sheet stack including: a color conversion sheet, configured to convert a wavelength of the light; and a plurality of light-diffusing sheets, being stacked between the color conversion sheet and the plurality of point light sources, and provided with a plurality of recesses having inverted substantially polygonal pyramid shape, wherein the plurality of recesses in the plurality of light-diffusing sheets have the same deployment surfaces and arrangement directions.

With the optical sheet stack according to the second aspect of the present disclosure, since the plurality of light-diffusing sheets provided with the plurality of inverted substantially polygonal pyramid-shaped recesses are stacked between the color conversion sheet and the plurality of point light sources, the brightness uniformity can be improved. Moreover, since the deployment surfaces and arrangement directions of the recesses in the plurality of light-diffusing sheets are the same, manufacture is easy. Furthermore, as compared with the configuration in which the plurality of light-diffusing sheets are stacked between the color conversion sheet and the display screen, the color conversion sheet can be separated from the plurality of point light sources, and as a result, deterioration of the color conversion sheet due to heat can be suppressed.

In the optical sheet stack according to the second aspect of the present disclosure, the plurality of point light sources and the plurality of recesses may be arranged in a two-dimensional matrix pattern, the plurality of recesses may be provided on the light entrance surfaces of the plurality of light-diffusing sheets, and the arrangement direction of the plurality of point light sources may intersect with the arrangement direction of the plurality of recesses. Thus, in a configuration in which the plurality of light-diffusing sheets, on which the plurality of inverted substantially polygonal pyramid-shaped recesses are provided in a two-dimensional matrix pattern, are stacked between the color conversion sheet and the plurality of point light sources, by providing the recesses on the light emission surface of each of the light-diffusing sheets and setting the arrangement direction of the point light sources and the arrangement direction of the recesses to intersect, the brightness uniformity can be further improved.

In the optical sheet stack according to the second aspect of the present disclosure, the plurality of point light sources and the plurality of recesses may be arranged in a two-dimensional matrix pattern, and the plurality of recesses may be provided on the light emission surfaces of the plurality of light-diffusing sheets. Thus, in a configuration in which the plurality of light-diffusing sheets, on which the plurality of inverted substantially polygonal pyramid-shaped recesses are provided in a two-dimensional matrix pattern, are stacked between the color conversion sheet and the plurality of point light sources, by providing the recesses on the light emission surface of each of the light-diffusing sheets, the brightness can be improved while improving the brightness uniformity.

In the optical sheet stack according to the first or second aspect of the present disclosure, by providing a brightness enhancing sheet, for example a prism sheet, closer to the display screen than the color conversion sheet and the plurality of light-diffusing sheets, the brightness can be improved while improving the brightness uniformity. In this case, by providing another light-diffusing sheet, for example an upper light-diffusing sheet, closer to the display screen than the brightness enhancing sheet, brightness unevenness caused by deployment of the brightness enhancing sheet can be suppressed.

A backlight unit according to the present disclosure guides light emitted from a plurality of point light sources to a display screen of a liquid crystal display device, and includes the light-diffusing sheet according to the first or second aspect of the present disclosure, described above, which is provided between the display screen and the plurality of point light sources. The plurality of point light sources may be blue light sources, for example.

Since the backlight unit according to the present disclosure includes the light-diffusing sheet according to the first or second aspect of the present disclosure, described above, the brightness uniformity can be improved, and manufacture is easy.

A liquid crystal display device according to the present disclosure includes the backlight unit according to the present disclosure, described above, and a liquid crystal display panel.

Since the liquid crystal display device according to the present disclosure includes the backlight unit according to the present disclosure, described above, the brightness uniformity can be improved, and manufacture is easy.

An information apparatus according to the present disclosure includes the liquid crystal display device according to the present disclosure, described above.

Since the information apparatus according to the present disclosure includes the liquid crystal display device according to the present disclosure, described above, the brightness uniformity can be improved, and manufacture is easy.

### Advantageous Effects of Invention

According to the present disclosure, it is possible to provide an optical sheet stack that is easy to manufacture and can improve the brightness uniformity, as well as a backlight unit, a liquid crystal display device, and an information apparatus using the optical sheet stack.

### Brief Description of Drawings

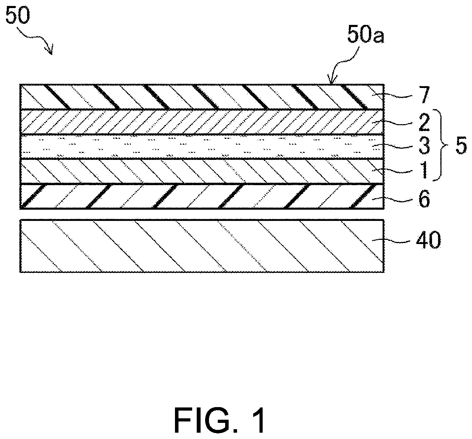

[FIG. 1] is a cross-sectional view of a liquid crystal display device according to an embodiment.

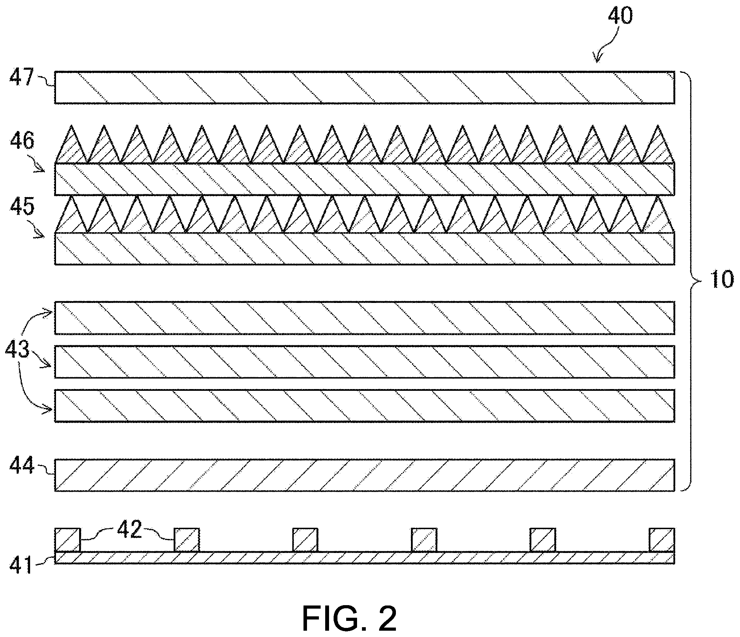

[FIG. 2] is a view showing a cross-sectional configuration of a backlight unit according to the embodiment.

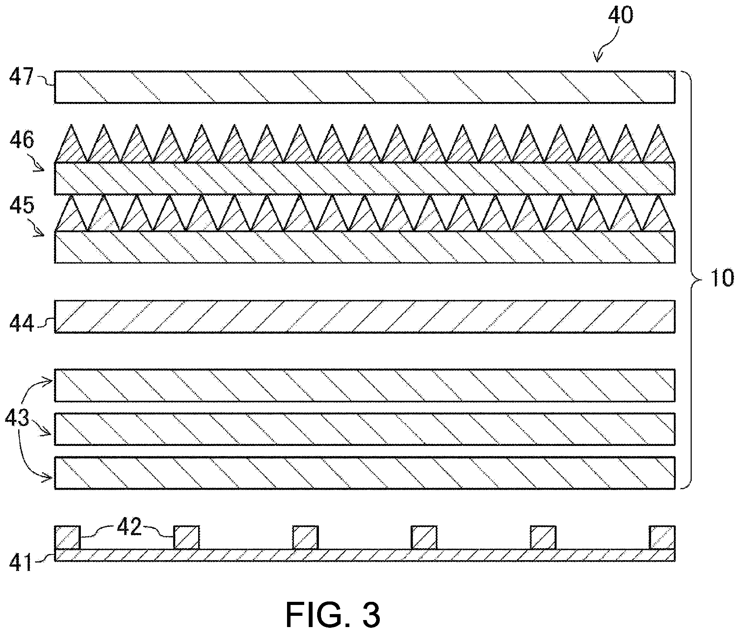

[FIG. 3] is a view showing a cross-sectional configuration of a backlight unit according to a modification.

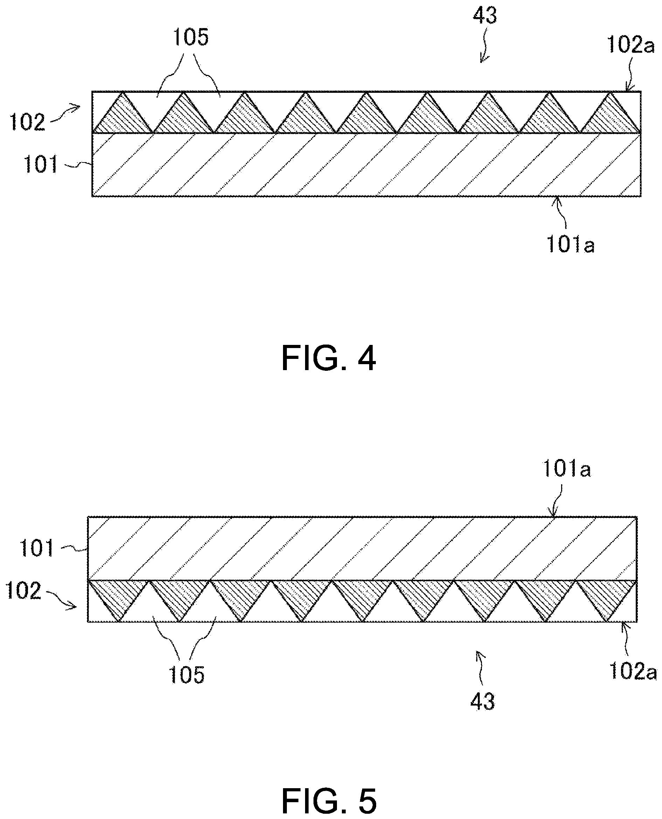

[FIG. 4] is a view showing a cross-sectional configuration of a light-diffusing sheet included in an optical sheet stack according to the embodiment.
[FIG. 5] is a view showing the cross-sectional configuration of the light-diffusing sheet included in the optical sheet stack according to the embodiment.

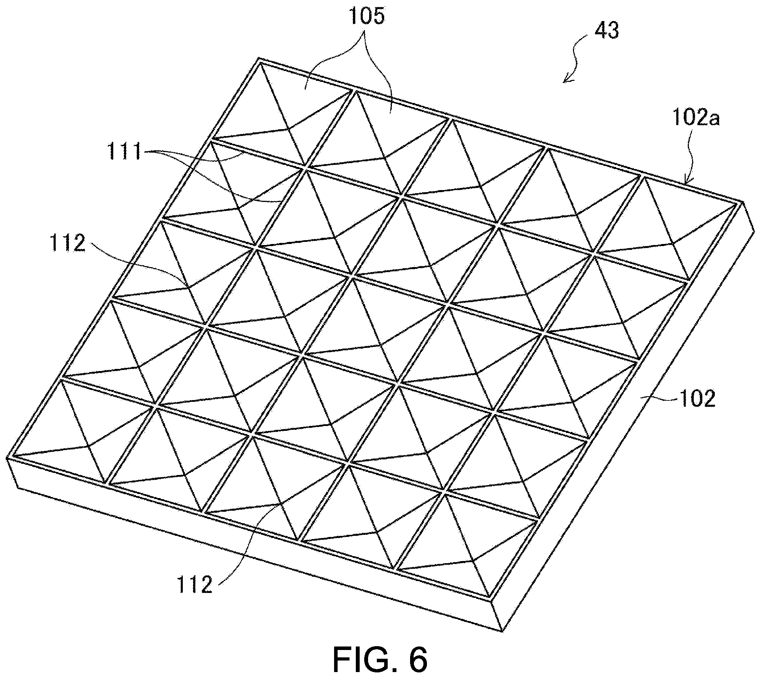

[FIG. 6] is a perspective view of the light-diffusing sheet included in the optical sheet stack according to the embodiment, viewed from a surface on which recesses are provided.

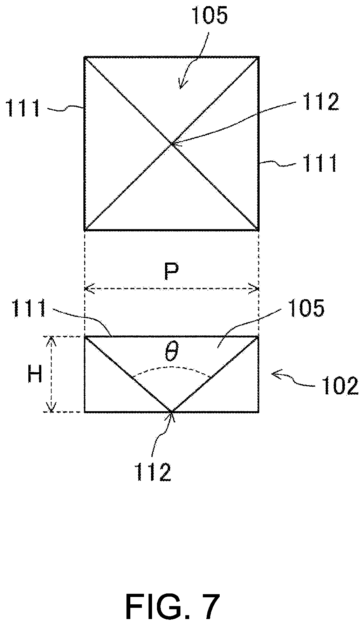

[FIG. 7] is a view showing a planar configuration and a cross-sectional configuration of a recess provided in the light-diffusing sheet included in the optical sheet stack according to the embodiment.

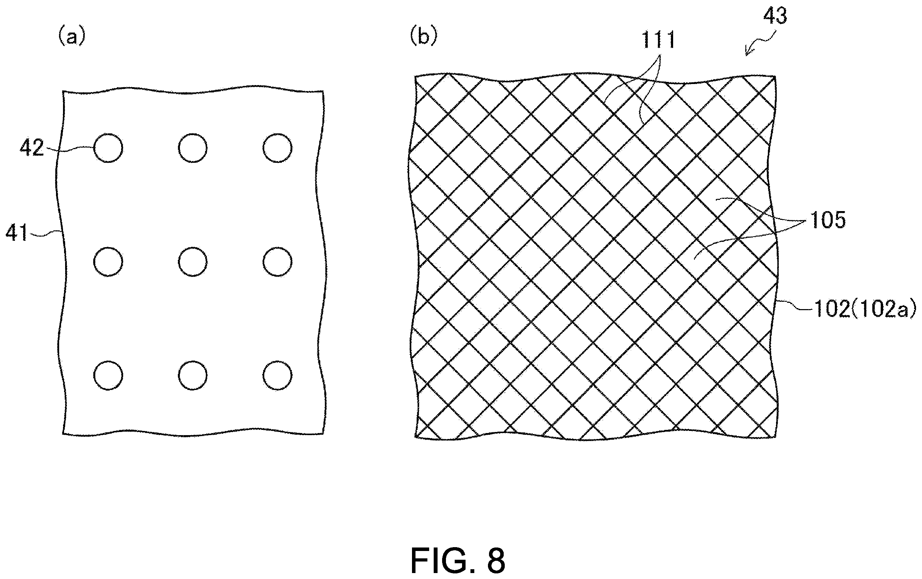

[FIG. 8] is a view showing a relationship between an arrangement direction of light sources and an arrangement direction of the recesses in the light-diffusing sheet in the backlight unit according to the embodiment, where (a) shows the arrangement of the light sources, and (b) shows the arrangement of the recesses.

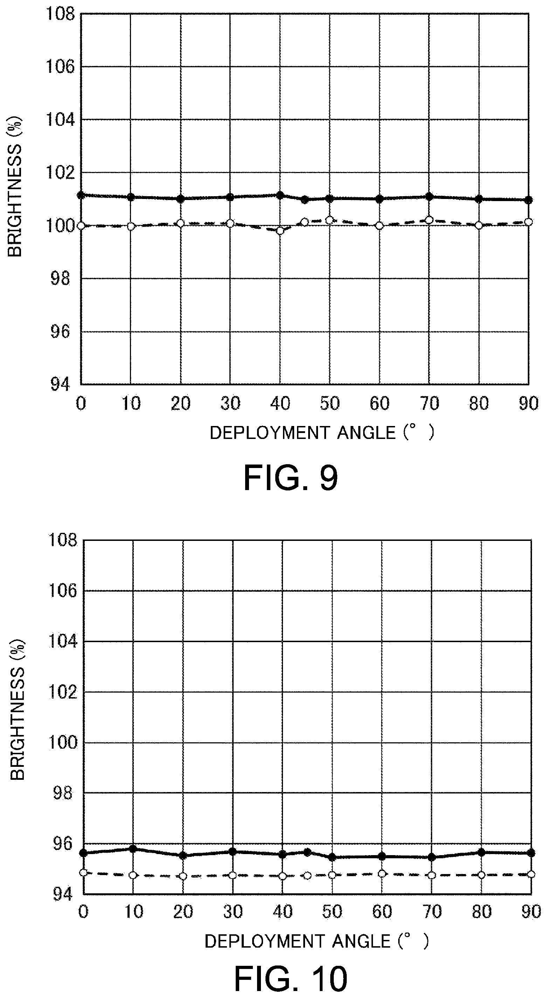

[FIG. 9] is a view showing results of examining the relationship between the brightness and the deployment angle of the recess arrangement relative to the light source arrangement in an optical sheet stack in which a color conversion sheet is deployed on the upper side of the light-diffusing sheet and inverted pyramid-shaped recesses are deployed on a light emission surface of the light-diffusing sheet.
[FIG. 10] is a view showing results of examining the relationship between the brightness and the deployment angle of the recess arrangement relative to the light source arrangement in an optical sheet stack in which the color conversion sheet is deployed on the upper side of the light-diffusing sheet and inverted pyramid-shaped recesses are deployed on a light entrance surface of the light-diffusing sheet.

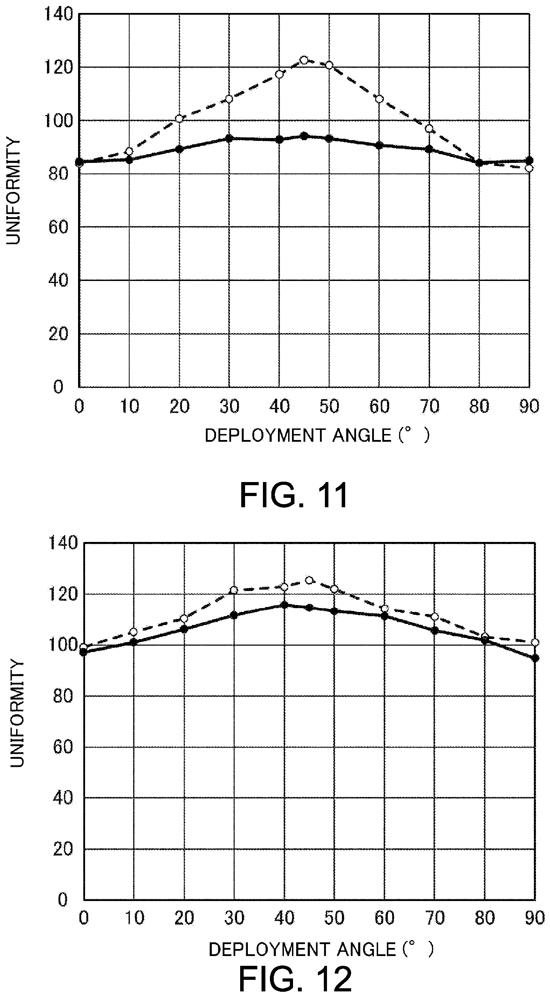

[FIG. 11] is a view showing results of examining the relationship between the brightness uniformity and the deployment angle of the recess arrangement relative to the light source arrangement in an optical sheet stack in which the color conversion sheet is deployed on the upper side of the light-diffusing sheet and inverted pyramid-shaped recesses are deployed on the light emission surface of the light-diffusing sheet.
[FIG. 12] is a view showing results of examining the relationship between the brightness uniformity and the deployment angle of the recess arrangement relative to the light source arrangement in an optical sheet stack in which the color conversion sheet is deployed on the upper side of the light-diffusing sheet and inverted pyramid-shaped recesses are deployed on the light entrance surface of the light-diffusing sheet.

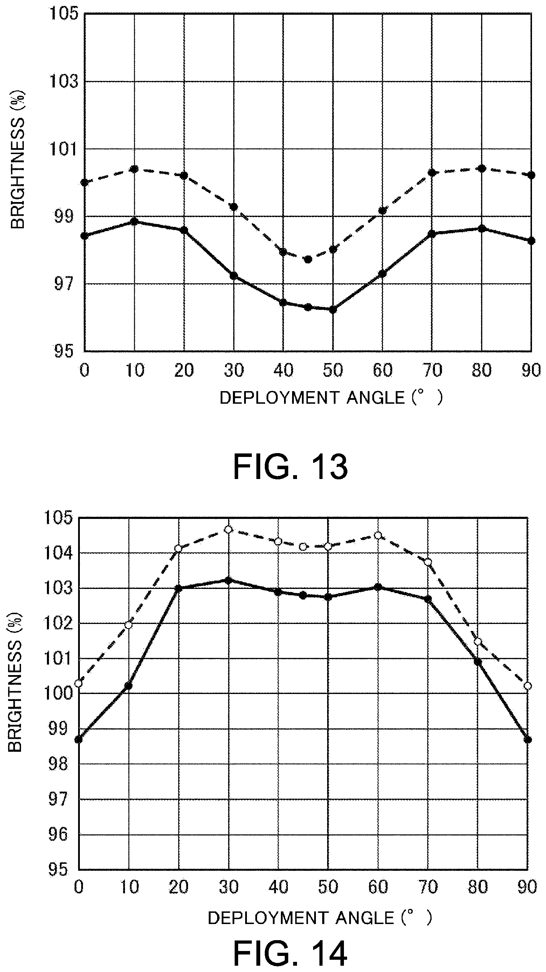

[FIG. 13] is a view showing results of examining the relationship between the brightness and the deployment angle of the recess arrangement relative to the light source arrangement in an optical sheet stack in which the color conversion sheet is deployed on the lower side of the light-diffusing sheet and inverted pyramid-shaped recesses are deployed on the light emission surface of the light-diffusing sheet.
[FIG. 14] is a view showing results of examining the relationship between the brightness and the deployment angle of the recess arrangement relative to the light source arrangement in an optical sheet stack in which the color conversion sheet is deployed on the lower side of the light-diffusing sheet and inverted pyramid-shaped recesses are deployed on the light entrance surface of the light-diffusing sheet.

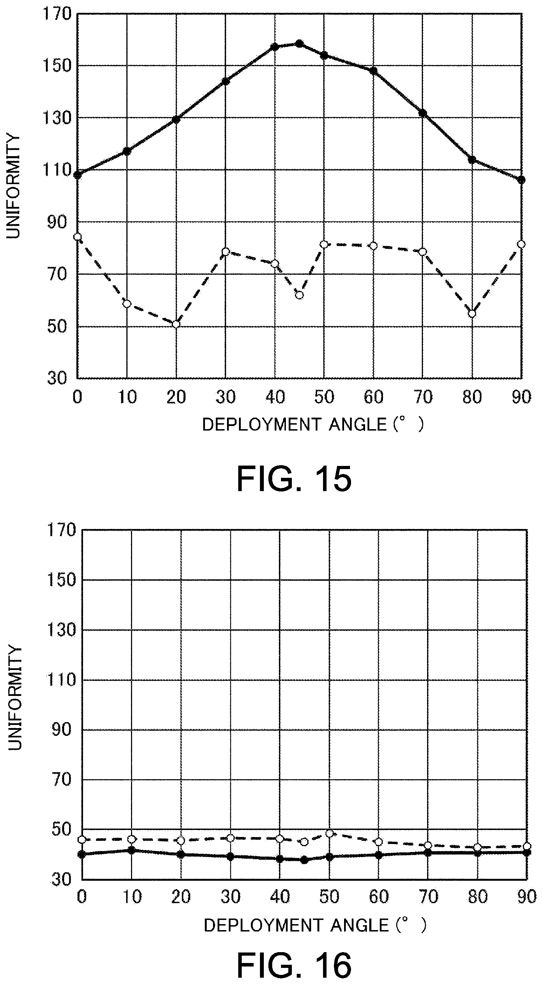

[FIG. 15] is a view showing results of examining the relationship between the brightness uniformity and the deployment angle of the recess arrangement relative to the light source arrangement in an optical sheet stack in which the color conversion sheet is deployed on the lower side of the light-diffusing sheet and inverted pyramid-shaped recesses are deployed on the light emission surface of the light-diffusing sheet.
[FIG. 16] is a view showing results of examining the relationship between the brightness uniformity and the deployment angle of the recess arrangement relative to the light source arrangement in an optical sheet stack in which the color conversion sheet is deployed on the lower side of the light-diffusing sheet and inverted pyramid-shaped recesses are deployed on the light entrance surface of the light-diffusing sheet.

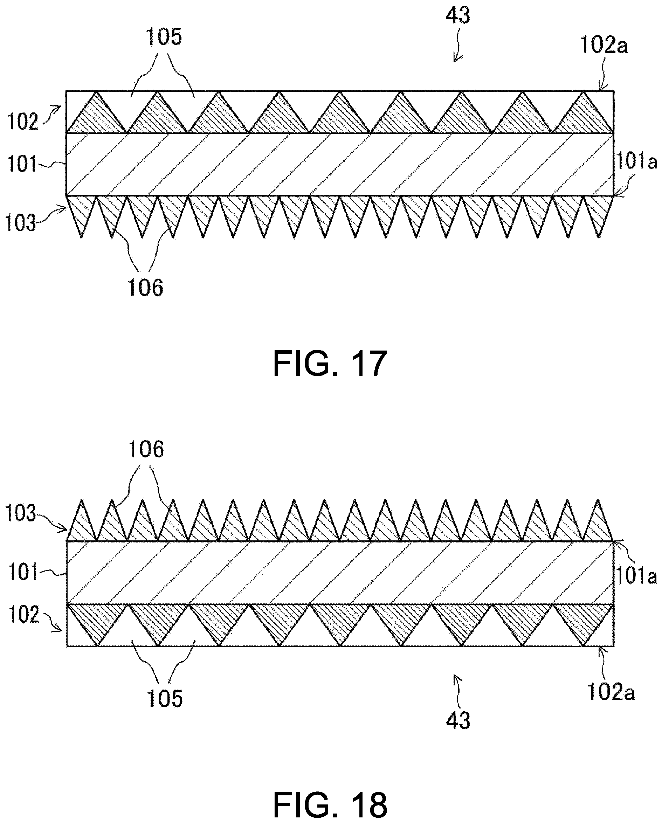

[FIG. 17] is a view showing a cross-sectional configuration of a light-diffusing sheet included in an optical sheet stack according to a modification.
[FIG. 18] is a view showing a cross-sectional configuration of a light-diffusing sheet included in an optical sheet stack according to a modification.

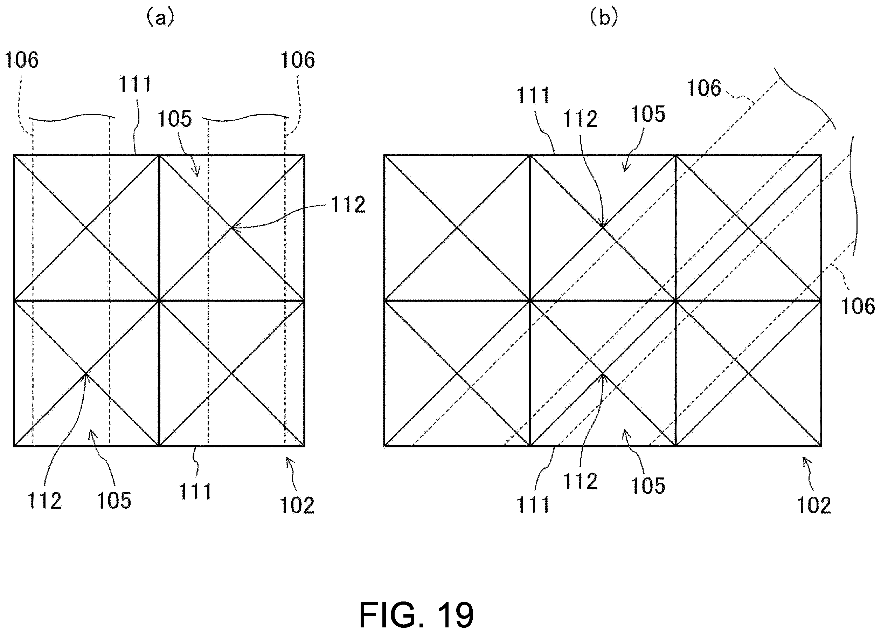

[FIG. 19] is a view showing a relationship between the arrangement direction of the recesses in the light-diffusing sheet shown in FIG. 17 or FIG. 18 and the extension direction of linear structures, where (a) shows a case in which the respective directions are aligned, and (b) shows a case in which the respective directions intersect at 45°.

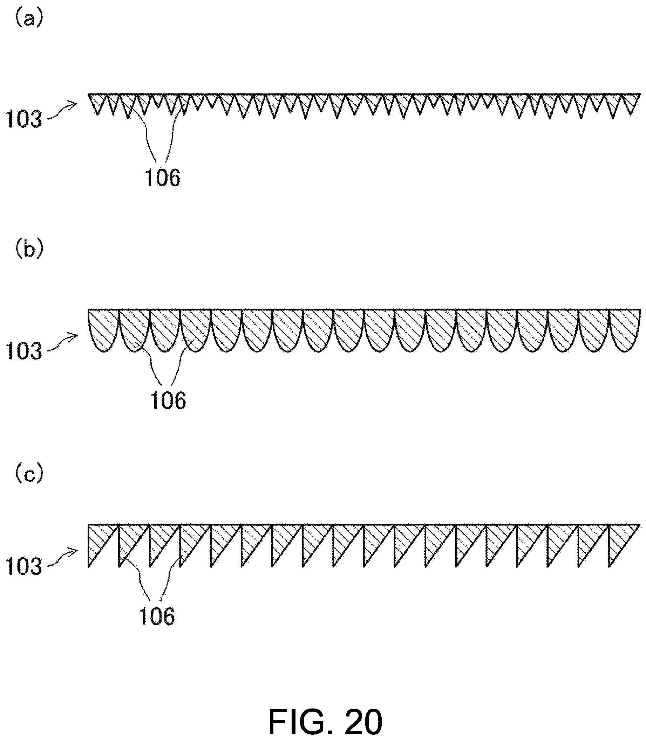

[FIG. 20] is a cross-sectional view showing variations in the linear structures provided on the light-diffusing sheet shown in FIG. 17 or FIG. 18, where (a) shows a case in which the linear structures have a hairline configuration, (b) shows a case in which the linear structures have a lenticular configuration, and (c) shows a case in which the linear structures form a diffraction grating.

### (Embodiment)

An optical sheet stack, a backlight unit, a liquid crystal display device, and an information apparatus according to an embodiment will be described below with reference to the drawings. It should be noted that the scope of the present disclosure is not limited to the embodiment described below, and any modifications can be made without departing from the scope of the technical ideas of the present disclosure. Also, since the drawings are intended to conceptually explain the present disclosure, dimensions, ratios, or numbers may be exaggerated or simplified as needed for ease of understanding.

### <Liquid crystal display device>

FIG. 1 is an example of a cross-sectional view of a liquid crystal display device according to an embodiment.

As shown in FIG. 1, a liquid crystal display device 50 includes a liquid crystal display panel 5, a first polarizing plate 6 adhered to a lower surface of the liquid crystal display panel 5, a second polarizing plate 7 adhered to an upper surface of the liquid crystal display panel 5, and a backlight unit 40 provided on the back surface side of the liquid crystal display panel 5 via the first polarizing plate 6. The liquid crystal display panel 5 includes a TFT substrate 1 and a CF substrate 2, which are provided so as to face each other, a liquid crystal layer 3 provided between the TFT substrate 1 and the CF substrate 2, and a sealing material (not shown) provided in a frame shape between the TFT substrate 1 and the CF substrate 2 in order to seal the liquid crystal layer 3.

The shape of a display screen 50a of the liquid crystal display device 50 as seen from the front (above in FIG. 1) is generally rectangular or square, but the shape is not limited thereto and may be any desired shape, such as a rectangular shape with rounded corners, an elliptical, circular, or trapezoidal shape, or the shape of an instrument panel for an automobile.

In the liquid crystal display device 50, a voltage of a predetermined magnitude is applied to the liquid crystal layer 3 in each sub-pixel corresponding to each pixel electrode in order to change the alignment state of the liquid crystal layer 3. Thus, the transmittance of light that enters from the backlight unit 40 through the first polarizing plate 6 is adjusted. The light having the adjusted transmittance is emitted through the second polarizing plate 7, whereby an image is displayed.

The liquid crystal display device 50 according to this embodiment is used as a display device incorporated into any of various information apparatuses (for example, an in-vehicle device for car navigation or the like, a personal computer, a mobile phone, a portable information terminal, a portable game machine, a copy machine, a ticket vending machine, an automated teller machine, or the like).

For example, the TFT substrate 1 includes a plurality of TFTs provided in a matrix pattern on a glass substrate, an interlayer insulating film provided so as to cover the TFTs, a plurality of pixel electrodes provided in a matrix pattern on the interlayer insulating film and respectively connected to the plurality of TFTs, and an alignment film provided so as to cover the pixel electrodes. For example, the CF substrate 2 includes a black matrix provided in a grid pattern on a glass substrate, a color filter including a red layer, a green layer, and a blue layer respectively provided between the grids of the black matrix, a common electrode provided so as to cover the black matrix and the color filter, and an alignment film provided so as to cover the common electrode. The liquid crystal layer 3 is constituted by a nematic liquid crystal material or the like containing liquid crystal molecules with electro-optic characteristics. For example, the first polarizing plate 6 and the second polarizing plate 7 include a polarizer layer with a polarizing axis in one direction and a pair of protective layers provided so as to sandwich the polarizer layer.

### <Backlight unit>

FIG. 2 shows a first example of a cross-sectional configuration of the backlight unit 40 according to the embodiment.

As shown in FIG. 2, the backlight unit 40 includes a reflective sheet 41, a plurality of point light sources 42 deployed on the reflective sheet 41 in a two-dimensional pattern, and an optical sheet stack 10 provided on the upper side of the plurality of point light sources 42. The optical sheet stack 10 includes a color conversion sheet 44 provided on the upper side of the plurality of point light sources 42, a plurality of light-diffusing sheets 43 provided on the upper side of the color conversion sheet 44, a first prism sheet 45 and a second prism sheet 46 provided in that order on the upper side of the plurality of light-diffusing sheets 43, and an upper light-diffusing sheet 47 provided on the upper side of the second prism sheet 46.

In the example shown in FIG. 2, the light-diffusing sheet 43 is provided on the backlight unit 40 as a three-layer stack, but the light-diffusing sheet 43 may be used as a single layer, or may be used as a two-layer stack or a stack of four or more layers.

The reflective sheet 41 is constituted by a white polyethylene terephthalate resin film, a silver vapor-deposited film, or the like, for example.

The type of the point light sources 42 is not particularly limited, and for example, LED elements, laser elements, or the like may be used, while from the perspectives of cost, productivity, and so on, LED elements may be used. In the example shown in FIG. 2, blue LED elements are used as the point light sources 42. The blue LED elements emit light of x < 0.24, y < 0.18 in terms of the CIE1931 chromaticity coordinates. The point light sources 42 may have a rectangular shape when seen in plan view, and in this case, the length of one side may be 10 µm or more (preferably 50 µm or more) and 10 mm or less (preferably 5 mm or less). When LED elements are used as the point light sources 42, the plurality of LED elements may be deployed on the reflective sheet 41 at fixed intervals. A lens may be mounted on the LED elements constituting the point light sources 42 in order to adjust the output angle characteristic of the LED elements. The number of deployed point light sources 42 is not particularly limited, but when the plurality of point light sources 42 are deployed in a distributed manner, the point light sources 42 are preferably deployed regularly on the reflective sheet 41. Regularly deployed means deployed with a fixed regularity, and for example corresponds to a case in which the point light sources 42 are deployed at equal intervals. When the point light sources 42 are deployed at equal intervals, a center-to-center distance between two adjacent point light sources 42 may be 0.5 mm or more (preferably, 2 mm or more) and 20 mm or less.

The color conversion sheet 44 is a wavelength conversion sheet that converts the light from the point light sources 42 (blue light in the example shown in FIG. 2) into light having a wavelength of a desired color (for example, green or red) as a peak wavelength. For example, the color conversion sheet 44 converts blue light having a wavelength of 450 nm into green light having a wavelength of 540 nm and red light having a wavelength of 650 nm. In this case, when point light sources 42 that emit blue light with a wavelength of 450 nm are used, the blue light is partially converted into green light and red light by the color conversion sheet 44, so that the light transmitted through the color conversion sheet 44 becomes white light. For example, a QD (quantum dot) sheet, a fluorescent sheet, or the like may be used as the color conversion sheet 44.

The light-diffusing sheet 43 diffuses and emits light entering from the point light sources 42. The matrix resin constituting the light-diffusing sheet 43 is not particularly limited as long as the matrix resin is constituted by a material that transmits light, and for example, polycarbonate, acrylic, polystyrene, MS (methyl methacrylate-styrene copolymer) resin, polyethylene terephthalate, polyethylene naphthalate, cellulose acetate, polyimide, and so on may be used. The thickness of the light-diffusing sheet 43 is also not particularly limited, and may be, for example, 50 µm or more and 3 mm or less. When the thickness of the light-diffusing sheet 43 exceeds 3 mm, it becomes difficult to achieve a thin liquid crystal display, whereas when the thickness of the light-diffusing sheet 43 falls below 50 µm, it becomes difficult to obtain a sufficient light diffusion effect. When a plurality of light-diffusing sheets 43 are stacked, as shown in FIG. 2, the total thickness of the stacked sheets may be around several hundred µm to several mm. The light-diffusing sheet 43 may be in the form of a film or a plate. The configuration and manufacturing method of the light-diffusing sheet 43 will be described in further detail below.

The first prism sheet 45 and the second prism sheet 46 are brightness enhancing sheets that refract light rays entering from the light-diffusing sheet 43 in a normal direction. For example, a plurality of groove lines with an isosceles triangle-shaped cross-section are provided adjacent to each other on the respective light emission surface sides of the prism sheets 45 and 46, and prisms are formed from triangular column parts sandwiched between adjacent pairs of groove lines. The apex angle of the prism is around 90°, for example. The groove lines formed in the first prism sheet 45 and the groove lines formed in the second prism sheet 46 may be deployed so as to be orthogonal to each other. Thus, the light rays entering from the light-diffusing sheet 43 can be refracted in the normal direction by the first prism sheet 45, and the light rays emitted from the first prism sheet 45 can be refracted by the second prism sheet 45 so as to advance substantially perpendicularly to the light entrance surface of the upper light-diffusing sheet 47. The prism sheets 45 and 46 may be stacked as separate bodies or may be formed integrally. The total thickness of the prism sheets 45 and 46 may be around 100-400 µm, for example. A PET (polyethylene terephthalate) film in which prism shapes are formed using a UV-curable acrylic resin, for example, may be used as the prism sheets 45 and 46.

Note that a single-layer prism sheet may be used as the brightness enhancing sheet in place of the prism sheets 45 and 46, or another type of optical sheet that can increase the brightness of the light emitted from the point light sources 42 may be used.

The upper light-diffusing sheet 47 slightly diffuses the light rays entering from the second prism sheet 46 side so as to suppress brightness unevenness due to the shape of the prism portions of the prism sheets 45 and 46 and so on. The upper light-diffusing sheet 47 may be directly stacked onto the front surface of the second prism sheet 46. The thickness of the light-diffusing sheet 47 is not particularly limited, but may be, for example, 50 µm or more and 3 mm or less. When the thickness of the upper light-diffusing sheet 47 exceeds 3 mm, it becomes difficult to achieve a thin liquid crystal display, whereas when the thickness of the upper light-diffusing sheet 47 falls below 50 µm, it becomes difficult to obtain a sufficient light diffusion effect. The upper light-diffusing sheet 47 may be in the form of a film or a plate. The upper light-diffusing sheet 47 may be configured to include a base material layer and a light-diffusing layer that is stacked on the light emission surface of the base material layer and contains a resin matrix and resin beads. Alternatively, the upper light-diffusing sheet 47 may be, for example, a PET film having an uneven shape that is provided on at least one surface thereof using a UV-curable acrylic resin.

### <Modification of backlight unit>

In the optical sheet stack 10 of the backlight unit 40 shown in FIG. 2, the color conversion sheet 44 is provided on the lower side of the light-diffusing sheet 43, or more specifically between the bottom layer of the light-diffusing sheet 43 and the plurality of point light sources 42. Alternatively, as in the optical sheet stack 10 of the backlight unit 40 shown in FIG. 3, the color conversion sheet 44 may be provided on the upper side of the light-diffusing sheet 43, or more specifically between the top layer of the light-diffusing sheet 43 and the first prism sheet 45.

Note that in the example configurations of the backlight unit 40 shown in FIGs. 2 and 3, blue light sources are used as the point light sources 42, and the color conversion sheet 44 is used. In an alternative configuration, white light sources may be used as the point light sources 42, and the color conversion sheet 44 may be omitted. In this case, the upper light-diffusing sheet 47 need not be deployed. The white light source is constituted by an LED element with a peak wavelength in the blue region, an LED element with a peak wavelength in the green region, and an LED element with a peak wavelength in the red region, and may emit light of 0.24 < x < 0.42, 0.18 < y < 0.48, for example, in terms of the CIE1931 chromaticity coordinates.

### <Light-diffusing sheet>

As shown in FIG. 4 or FIG. 5, the light-diffusing sheet 43 mainly includes a base material layer 101 and a light-diffusing layer 102 provided on the base material layer 101. The light-diffusing sheet 43 has a first surface (the front surface of the base material layer 101) 101a that serves as one of a light entrance surface and a light emission surface, and a second surface (the front surface of the light-diffusing layer 102) 102a that serves as the other of the light entrance surface and the light emission surface. The light-diffusing layer 102 is provided with a plurality of recesses 105 having an uneven shape, for example an inverted substantially polygonal pyramid shape (in this example, an inverted substantially square pyramid shape (an inverted pyramid shape)), for diffusing light. The first surface 101a of the light-diffusing sheet 43 may be, for example, a matte surface or a flat surface.

Note that FIG. 4 shows a case in which the light-diffusing sheet 43 is deployed such that the first surface 101a serves as the light entrance surface and the second surface 102a serves as the light emission surface, while FIG. 5 shows a case in which the light-diffusing sheet 43 is deployed such that the first surface 101a serves as the light emission surface and the second surface 102a serves as the light entrance surface.

The base material layer 101 is required to transmit light rays, and is therefore formed using a transparent (for example, colorless transparent) synthetic resin as the main component. The main component of the base material layer 101 is not particularly limited, and for example, polycarbonate, polyethylene terephthalate, polyethylene naphthalate, acrylic resin, polystyrene, polyolefin, cellulose acetate, weather-resistant vinyl chloride, or the like may be used. Note that the term "main component" refers to the component having the highest content, for example, a component having a content of 50% by mass or more. The base material layer 101 may contain a diffusing agent or other additives, or may contain substantially no additives. The additives that can be included are not particularly limited, and may be inorganic particles of silica, titanium oxide, aluminum hydroxide, barium sulfate, or the like, for example, or organic particles of acrylic, acrylonitrile, silicone, polystyrene, polyamide, or the like, for example.

The lower limit of the average thickness of the base material layer 101 is preferably around 10 µm, more preferably around 35 µm, and even more preferably around 50 µm. The upper limit of the average thickness of the base material layer 101 is preferably around 500 µm, more preferably around 250 µm, and even more preferably around 180 µm. When the average thickness of the base material layer 101 is less than the lower limit, there is a risk of curling occurring when the diffusion layer 102 is formed. Conversely, when the average thickness of the base material layer 101 exceeds the upper limit, the brightness of the liquid crystal display device 50 may decrease, and it may become difficult to respond to demand to make the liquid crystal display device 50 thin. It should be noted that term "average thickness" refers to an average value of the thickness at any ten points.

The light-diffusing layer 102 is required to transmit light rays, and is therefore formed using a transparent (for example, colorless transparent) synthetic resin as the main component. For example, the light-diffusing layer 102 may be molded integrally with the base material layer 101 during extrusion molding of a base material resin forming the base material layer 101, or may be molded separately using a UV-curable resin after molding the base material layer 101.

As shown in FIG. 6, for example, the plurality of inverted substantially square pyramid-shaped (inverted pyramid-shaped) recesses 105 provided on the light-diffusing layer 102 (the second surface 102a of the light-diffusing sheet 43) may be arranged in a two-dimensional matrix pattern. In other words, the plurality of recesses 105 may be arranged along two mutually orthogonal directions. Adjacent recesses 105 are partitioned by ridge lines 111. The ridge lines 111 extend along the two directions in which the recesses 105 are arranged. The arrangement pitch of the recesses 105 may be, for example, around 50 µm or more and around 500 µm or less. A center (the apex of the inverted pyramid) 112 of the recess 105 is the deepest portion of the recess 105. The center (the deepest portion) 112 of the recess 105 may reach the base material layer 101. In other words, the depth of the recess 105 may be set to be equal to the thickness of the light-diffusing layer 102. Note that although FIG. 6 illustrates a state in which the recesses 105 are deployed in a 5×5 matrix pattern for the sake of simplicity, the actual number of arranged recesses 105 is significantly larger.

The apex angle θ of the recess 105 is set at around 90°, for example. As shown in FIG. 7, the apex angle θ of the recess 105 is an angle formed by inclined surfaces of the recess 105 in a cross-section (the lower diagram in FIG. 7) that appears when the recess 105 is cut so as to perpendicularly cross a pair of ridge lines 111 that pass through the apex 112 of the inverted pyramid and face each other across the apex 112 in a plane (a vertical cross-section) that is perpendicular to the placement surface (a horizontal plane) of the light-diffusing sheet 43. Note that the upper diagram of FIG. 7 shows the planar configuration of the recess 105. Furthermore, in FIG. 7, "H" denotes the depth of the recess 105 (the height of the pyramid shape), and "P" denotes the horizontal width of the recess 105 (in other words, the arrangement pitch of the recesses 105). The depth H of the recess 105 is determined by the arrangement pitch P of the recesses 105 and the apex angle θ of the recess 105.

When the plurality of point light sources 42 are arranged in a square shape, as shown in (a) of FIG. 8, the arrangement direction of the recesses 105 may be inclined by around 45°, for example, as shown in (b) of FIG. 8, using the arrangement direction of the point light sources 42 as a reference. When the recesses 105 are formed in an inverted pyramid shape, by setting the arrangement direction of the point light sources 42 and the arrangement direction of the recesses 105 to intersect, the brightness uniformity can be improved more than when the two arrangement directions are aligned.

Note that although in this embodiment, the inverted pyramid-shaped (inverted substantially square pyramid-shaped) recesses 105 are arranged in a two-dimensional matrix pattern so as to form an uneven shape, the recesses 105 may be arranged randomly as long as the actions and effects of the present invention are not lost. When the recesses 105 are regularly arranged in a two-dimensional arrangement, gaps may be provided between the recesses 105, but do not have to be provided. The recesses 105 may have an inverted substantially polygonal pyramid shape other than an inverted substantially square pyramid shape. For example, the "inverted polygonal pyramid" shape of the recess 105 may be an inverted triangular pyramid or an inverted hexagonal pyramid that can be deployed two-dimensionally without gaps, similarly to an inverted square pyramid. When the "inverted polygonal pyramid" shape of the recesses 105 is an inverted square pyramid, it is easy to improve the accuracy of a surface cutting operation of a metal mold (a metal roll) used in a manufacturing process such as extrusion molding or injection molding performed when providing the recesses 105.

Furthermore, while the term "inverted substantially polygonal pyramid" is used in the present disclosure in consideration of the fact that it is difficult to form geometrically strict inverted polygonal pyramid-shaped recesses using ordinary shape transfer techniques, it is assumed that the term "inverted substantially polygonal pyramid" includes shapes that can be regarded as a truly or substantially inverted polygonal pyramid. In addition, the term "substantially" means "can be approximated" such that, for example, an "inverted substantially square pyramid" refers to a shape that can approximate an inverted square pyramid. For example, likewise with regard to an "inverted polygonal truncated pyramid" having a flat top, as long as the actions and effects of the present invention are not lost, a shape having a small top area is also assumed to be included as an "inverted substantially polygonal pyramid". Furthermore, shapes that are deformed from an "inverted polygonal pyramid" within the range of inevitable shape variability due to machining accuracy in industrial production are also assumed to be included as an "inverted substantially polygonal pyramid".

### <Method of manufacturing light-diffusing sheet>

The method for manufacturing the light-diffusing sheet 43 is not particularly limited, and for example, it is possible to manufacture the light-diffusing sheet 43 using any of the following manufacturing methods.

In a first manufacturing method, first, a pellet-form base material resin (plastic resin) is formed into a resin film by an extrusion molding machine. Next, using a roll having convex pyramid shapes on the surface thereof as one of two metal rolls and using a roll having a flat shape or an inverted shape of a matte surface on the surface thereof as the other roll, the light-diffusing sheet 43 having inverted pyramid shapes (the recesses 105) on one surface and a flat surface or a matte surface on the other surface is manufactured by pressing the two rolls against the resin film. In this manufacturing method, the base material layer 101 and the light-diffusing layer 102 are formed integrally.

In a second manufacturing method, first, the base material layer 101 having polyethylene terephthalate, for example, as the main component is prepared. While feeding the base material layer 101 between a pair of pressing rolls, a UV-curable resin (a resin composition for forming protrusions) is supplied to one surface of the base material layer 101 immediately before the pair of pressing rolls. A pressing roll having a plurality of substantially square pyramid-shaped protrusions on the outer peripheral surface thereof is used as the pressing roll on the side that comes into contact with the UV-curable resin. After pressing the pair of pressing rolls against the base material layer 101 to which the UV-curable resin has been supplied, the UV-curable resin is cured by UV irradiation, whereby a plurality of inverted pyramid shapes (the recesses 105), which are inverted shapes of the plurality of substantially square pyramid-shaped protrusions, are transferred, and as a result, the light-diffusing sheet 43 with the light-diffusing layer 102 provided on one surface of the base material layer 101 is manufactured. In this manufacturing method, the base material layer 101 and the light-diffusing layer 102 are formed separately.

### <Features of embodiment (including modification)>

In the optical sheet stack 10 of the backlight unit 40 of the embodiment shown in FIG. 2, the plurality of light-diffusing sheets 43 provided with the plurality of inverted substantially polygonal pyramid-shaped recesses 105 are stacked on the upper side of the color conversion sheet 44 (specifically, between the color conversion sheet 44 and the first prism sheet 45), and therefore the brightness uniformity can be improved. Here, by making the deployment surfaces and arrangement directions of the recesses 105 on the plurality of light-diffusing sheets 43 the same, the optical sheet stack 10 can be manufactured easily.

In the optical sheet stack 10 of the backlight unit 40 of the embodiment shown in FIG. 2, the plurality of point light sources 42 and the plurality of recesses 105 may be arranged in a two-dimensional matrix pattern, the plurality of recesses 105 may be provided on the light emission surfaces of the plurality of light-diffusing sheets 43, and the arrangement direction of the plurality of point light sources 42 and the arrangement direction of the plurality of recesses 105 may intersect. Thus, in a configuration in which the plurality of light-diffusing sheets 43, on which the plurality of inverted substantially polygonal pyramid-shaped recesses 105 are provided in a two-dimensional matrix pattern, are stacked on the upper side of the color conversion sheet 44, by providing the recesses 105 on the light emission surface of each of the light-diffusing sheets 43 and setting the arrangement direction of the point light sources 42 and the arrangement direction of the recesses 105 to intersect, the brightness uniformity can be further improved.

In the optical sheet stack 10 of the backlight unit 40 of the embodiment shown in FIG. 2, the plurality of point light sources 42 and the plurality of recesses 105 may be arranged in a two-dimensional matrix pattern, the plurality of recesses 105 may be provided on the light entrance surfaces of the plurality of light-diffusing sheets 43, and the arrangement direction of the plurality of point light sources 42 and the arrangement direction of the plurality of recesses 105 may intersect. Thus, in a configuration in which the plurality of light-diffusing sheets 43, on which the plurality of inverted substantially polygonal pyramid-shaped recesses 105 are provided in a two-dimensional matrix pattern, are stacked on the upper side of the color conversion sheet 44, by providing the recesses 105 on the light entrance surface of each of the light-diffusing sheets 43 and setting the arrangement direction of the point light sources 42 and the arrangement direction of the recesses 105 to intersect, the brightness can be improved while improving the brightness uniformity.

In the optical sheet stack 10 of the backlight unit 40 of the modification shown in FIG. 3, the plurality of light-diffusing sheets 43 provided with the plurality of inverted substantially polygonal pyramid-shaped recesses 105 are stacked between the color conversion sheet 44 and the plurality of point light sources 42, and as a result, the brightness uniformity can be improved. Here, by making the deployment surfaces and arrangement directions of the recesses 105 on the plurality of light-diffusing sheets 43 the same, the optical sheet stack 10 can be manufactured easily.

In the optical sheet stack 10 of the backlight unit 40 of the modification shown in FIG. 3, the plurality of point light sources 42 and the plurality of recesses 105 may be arranged in a two-dimensional matrix pattern, the plurality of recesses 105 may be provided on the light entrance surfaces of the plurality of light-diffusing sheets 43, and the arrangement direction of the plurality of point light sources 42 and the arrangement direction of the plurality of recesses 105 may intersect. Thus, in a configuration in which the plurality of light-diffusing sheets 43, on which the plurality of inverted substantially polygonal pyramid-shaped recesses 105 are provided in a two-dimensional matrix pattern, are stacked between the color conversion sheet 44 and the plurality of point light sources 42, by providing the recesses 105 on the light entrance surface of each of the light-diffusing sheets 43 and setting the arrangement direction of the point light sources 42 and the arrangement direction of the recesses 105 to intersect, the brightness uniformity can be further improved.

In the optical sheet stack 10 of the backlight unit 40 of the modification shown in FIG. 3, the plurality of point light sources 42 and the plurality of recesses 105 may be arranged in a two-dimensional matrix pattern, and the plurality of recesses 105 may be provided on the light emission surfaces of the plurality of light-diffusing sheets 43. Thus, in a configuration in which the plurality of light-diffusing sheets 43, on which the plurality of inverted substantially polygonal pyramid-shaped recesses 105 are provided in a two-dimensional matrix pattern, are stacked between the color conversion sheet 44 and the plurality of point light sources 42, by providing the recesses 105 on the light emission surface of each of the light-diffusing sheets 43, the brightness can be improved while improving the brightness uniformity.

In the optical sheet stack 10 of the backlight unit 40 of the embodiment shown in FIG. 2 or the optical sheet stack 10 of the backlight unit 40 of the modification shown in FIG. 3, by providing a brightness enhancing sheet, for example the prism sheets 45 and 46, on the upper side of the color conversion sheet 44 and the plurality of light-diffusing sheets 43 (near the display screen 50a), the brightness can be improved while improving the brightness uniformity. In this case, by providing another light-diffusing sheet, for example the upper light-diffusing sheet 47, on the upper side of the brightness enhancing sheet (near the display screen 50a), brightness unevenness caused by deployment of the brightness enhancing sheet can be suppressed.

The backlight unit 40 of the embodiment or the modification guides the light emitted from the plurality of point light sources 42 to the display screen 50a of the liquid crystal display device. The backlight unit 40 includes the optical sheet stack 10 described above, which is provided between the display screen 50a and the point light sources 42. Thus, the brightness uniformity can be improved, and manufacture is easy. The plurality of point light sources 42 may be blue light sources, for example.

In the backlight unit 40 according to the embodiment or the modification, the plurality of point light sources 42 may be deployed on the reflective sheet 41 provided on the opposite side of the display screen 50a when viewed from the light-diffusing sheet 43. Thus, the light is further diffused by multiple reflection between the light-diffusing sheet 43 and the reflective sheet 41, so that the brightness uniformity is further improved.

The liquid crystal display device 50 of the embodiment includes the backlight unit 40 of the embodiment or the modification, and the liquid crystal display panel 5. Thus, the brightness uniformity can be improved, and manufacture is easy. Similar effects can also be obtained in an information apparatus (a personal computer, a mobile phone, or the like) into which the liquid crystal display device 50 of the embodiment is incorporated.

### (Examples)

Results of evaluating the brightness and brightness uniformity in examples of the optical sheet stack 10 will be described below.

The brightness and brightness uniformity were evaluated with the backlight configuration shown in FIG. 2 or FIG. 3.

Specifically, an LED array in which blue LED elements were arranged in a square array (with a pitch of around 2.8 mm × around 2.8 mm) was used as the plurality of light sources 42.

Two types of sheets were used as the light-diffusing sheet 43, namely a sample A, in which a matte surface was used as the first surface 101a of a polycarbonate sheet having a thickness of 95 µm, and the inverted pyramid-shaped recesses 105 having a depth of 50 µm and an apex angle of 90° were arranged on the second surface 102a in a two-dimensional matrix pattern at a pitch of 100 µm, and a sample B, in which a matte surface was used as the first surface 101a of a polycarbonate sheet having a thickness of 112 µm, and the inverted pyramid-shaped recesses 105 having a depth of 50 µm and an apex angle of 90° were arranged on the second surface 102a in a two-dimensional matrix pattern at a pitch of 100 µm.

A quantum dot (QD) sheet was used as the color conversion sheet 44.

A sheet obtained by shape-transferring prisms having a height of 12 µm and an apex angle of 90° onto a PET film having a thickness of 91 µm using a UV-curable resin was used as the first prism sheet 45. A sheet obtained by shape-transferring prisms having a height of 25 µm and an apex angle of 90° onto a PET film having a thickness of 153 µm using a UV-curable resin was used as the second prism sheet 46. The first prism sheet 45 and the second prism sheet 46 were deployed so that the respective prisms thereof were orthogonal to each other and the prisms of the second prism sheet 46 formed an angle of 40° with the arrangement direction of the light sources 42.

A sheet formed by applying a bead coating to a PET film having a thickness of 138 µm was used as the upper light-diffusing sheet 47.

In the configuration described above, the brightness and brightness uniformity were evaluated in the following manner in a state where a transparent glass plate was placed on the upper light-diffusing sheet 47 in order to prevent the sheet from floating up. First, using a two-dimensional color brightness meter SR-5000, manufactured by Topcon Technohouse Corp., the brightness (cd/m²) upward in a vertical direction (a direction traveling from the LED array toward the glass plate) was measured. Next, an obtained two-dimensional brightness distribution image was corrected for variation in the emission intensity of the individual LEDs, filtering processing was executed to suppress bright spot and dark spot noise caused by foreign matter and the like, and then an average value and a standard deviation were calculated for the brightness of all of the pixels. Finally, the brightness and the brightness uniformity were calculated, with the "brightness" defined as "average value of brightness" and the "brightness uniformity" defined as "average value of brightness/standard deviation of brightness".

FIG. 9 shows results of examining a relationship between the brightness and the angle of intersection of the arrangement direction of the recesses 105 relative to the arrangement direction of the point light sources 42 (hereinafter referred to as the deployment angle of the recesses 105) when the recesses 105 are deployed on the light emission surface of each light-diffusing sheet 43 in the backlight configuration shown in FIG. 3 (the configuration in which the color conversion sheet 44 is deployed on the upper side of the light-diffusing sheet 43). The deployment angle of the recesses 105 is an angle obtained by rotating the light-diffusing sheet 43 in a counter-clockwise direction from a state in which the arrangement direction of the point light sources 42 and the arrangement direction of the recesses 105 are aligned.

FIG. 10 shows results of examining the relationship between the brightness and the deployment angle of the recesses 105 when the recesses 105 are deployed on the light entrance surface of each light-diffusing sheet 43 in the backlight configuration shown in FIG. 3 (the configuration in which the color conversion sheet 44 is deployed on the upper side of the light-diffusing sheet 43).

Note that in FIGs. 9 and 10, results obtained when the sample A was used as the light-diffusing sheet 43 are shown by dotted lines, and results obtained when the sample B was used as the light-diffusing sheet 43 are shown by solid lines. Further, the brightness is indicated by a relative brightness in which the brightness when the recesses 105 are deployed at a deployment angle of 0° on the light emission surface of the sample A of the light-diffusing sheet 43 is set as 100%.

As shown in FIGs. 9 and 10, in the configuration in which the color conversion sheet 44 is deployed on the upper side of the light-diffusing sheet 43, the brightness was higher when the recesses 105 were provided on the light emission surface of each light-diffusing sheet 43 than when the recesses 105 were provided on the light entrance surface of each light-diffusing sheet 43. Furthermore, the deployment angle of the recesses 105 had almost no effect on the brightness.

FIG. 11 shows results of examining the relationship between the brightness uniformity and the deployment angle of the recesses 105 when the recesses 105 are deployed on the light emission surface of each light-diffusing sheet 43 in the backlight configuration shown in FIG. 3 (the configuration in which the color conversion sheet 44 is deployed on the upper side of the light-diffusing sheet 43).

FIG. 12 shows results of examining the relationship between the brightness uniformity and the deployment angle of the recesses 105 when the recesses 105 are deployed on the light entrance surface of each light-diffusing sheet 43 in the backlight configuration shown in FIG. 3 (the configuration in which the color conversion sheet 44 is deployed on the upper side of the light-diffusing sheet 43).

Note that in FIGs. 11 and 12, the results obtained when the sample A was used as the light-diffusing sheet 43 are shown by dotted lines, and the results obtained when the sample B was used as the light-diffusing sheet 43 are shown by solid lines.

As shown in FIGs. 11 and 12, in the configuration in which the color conversion sheet 44 is deployed on the upper side of the light-diffusing sheet 43, the brightness uniformity was higher when the recesses 105 were provided on the light entrance surface of each light-diffusing sheet 43 than when the recesses 105 were provided on the light emission surface of each light-diffusing sheet 43. Further, the brightness uniformity was dependent on the deployment angle of the recesses 105 such that the brightness uniformity showed an increasing tendency when the deployment angle of the recesses 105 was 0° to 45°, and showed a decreasing tendency from 45° to 90°. In other words, it was found that the brightness uniformity was further improved by setting the arrangement direction of the point light sources 42 and the arrangement direction of the recesses 105 to intersect.

FIG. 13 shows results of examining the relationship between the brightness and the deployment angle of the recesses 105 when the recesses 105 are deployed on the light emission surface of each light-diffusing sheet 43 in the backlight configuration shown in FIG. 2 (the configuration in which the color conversion sheet 44 is deployed on the lower side of the light-diffusing sheet 43).

FIG. 14 shows results of examining the relationship between the brightness and the deployment angle of the recesses 105 when the recesses 105 are deployed on the light entrance surface of each light-diffusing sheet 43 in the backlight configuration shown in FIG. 2 (the configuration in which the color conversion sheet 44 is deployed on the lower side of the light-diffusing sheet 43).

Note that in FIGs. 13 and 14, the results obtained when the sample A was used as the light-diffusing sheet 43 are shown by dotted lines, and the results obtained when the sample B was used as the light-diffusing sheet 43 are shown by solid lines. Further, the brightness is indicated by a relative brightness in which the brightness when the recesses 105 are deployed at a deployment angle of 0° on the light emission surface of the sample A of the light-diffusing sheet 43 in the backlight configuration shown in FIG. 3 (the configuration in which the color conversion sheet 44 is deployed on the upper side of the light-diffusing sheet 43) is set as 100%.

As shown in FIGs. 13 and 14, in the configuration in which the color conversion sheet 44 is deployed on the lower side of the light-diffusing sheet 43, the brightness was higher when the recesses 105 were provided on the light entrance surface of each light-diffusing sheet 43 than when the recesses 105 were provided on the light emission surface of each light-diffusing sheet 43. Further, the brightness was dependent on the deployment angle of the recesses 105 such that in the case where the recesses 105 were provided on the light entrance surface of each light-diffusing sheet 43, the brightness showed an increasing tendency when the deployment angle of the recesses 105 was 0° to 30°, was substantially fixed from 30° to 60°, and showed a decreasing tendency from 60° to 90°. In other words, it was found that when the recesses 105 were provided on the light entrance surface of each light-diffusing sheet 43, the brightness was further improved by setting the arrangement direction of the point light sources 42 and the arrangement direction of the recesses 105 to intersect.

FIG. 15 shows results of examining the relationship between the brightness uniformity and the deployment angle of the recesses 105 when the recesses 105 are deployed on the light emission surface of each light-diffusing sheet 43 in the backlight configuration shown in FIG. 2 (the configuration in which the color conversion sheet 44 is deployed on the lower side of the light-diffusing sheet 43).

FIG. 16 shows results of examining the relationship between the brightness uniformity and the deployment angle of the recesses 105 when the recesses 105 are deployed on the light entrance surface of each light-diffusing sheet 43 in the backlight configuration shown in FIG. 2 (the configuration in which the color conversion sheet 44 is deployed on the lower side of the light-diffusing sheet 43).

Note that in FIGs. 15 and 16, the results obtained when the sample A was used as the light-diffusing sheet 43 are shown by dotted lines, and the results obtained when the sample B was used as the light-diffusing sheet 43 are shown by solid lines.

As shown in FIGs. 15 and 16, in the configuration in which the color conversion sheet 44 is deployed on the lower side of the light-diffusing sheet 43, the brightness uniformity was higher when the recesses 105 were provided on the light emission surface of each light-diffusing sheet 43 than when the recesses 105 were provided on the light entrance surface of each light-diffusing sheet 43. Further, when the recesses 105 were provided on the light emission surface of the light-diffusing sheet 43, the brightness uniformity was dependent on the deployment angle of the recesses 105 such that in the case where the recesses 105 were provided on the light emission surface of the sample B of the light-diffusing sheet 43, the brightness uniformity showed an increasing tendency when the deployment angle of the recesses 105 was 0° to 45°, and showed a decreasing tendency from 45° to 90°. In other words, it was found that when the recesses 105 were provided on the light emission surface of the sample B of the light-diffusing sheet 43, the brightness uniformity was further improved by setting the arrangement direction of the point light sources 42 and the arrangement direction of the recesses 105 to intersect.

### (Other embodiments)

While an embodiment (including examples; the same applies hereinafter) of the present disclosure was described above, the present disclosure is not solely limited to the embodiment described above and various modifications can be made within the scope of the disclosure. In other words, the foregoing description of the embodiment is merely illustrative in nature and is not intended to limit the present disclosure, its applications, or its uses.

In the embodiment described above, the first surface 101a of the light-diffusing sheet 43 included in the optical sheet stack 10 was exemplified as a matte surface or a flat surface, but instead, as in a modification shown in FIG. 17 or FIG. 18, for example, a functional layer 103 constituted by a plurality of linear structures 106 extending in a predetermined direction may be provided on the first surface 101a of the light-diffusing sheet 43.

Note that in FIG. 17 or FIG. 18, identical reference numerals have been allocated to identical elements to those of the light-diffusing sheet 43 of the above embodiment shown in FIG. 4 or FIG. 5. FIG. 17 shows a case in which the light-diffusing sheet 43 of the modification is deployed such that the first surface 101a is the light entrance surface and the second surface 102a is the light emission surface, and FIG. 18 shows a case in which the light-diffusing sheet 43 of the modification is deployed such that the first surface 101a is the light emission surface and the second surface 102a is the light entrance surface.

The functional layer 103 is required to transmit light rays, and may therefore be formed using a transparent (for example, colorless and transparent) synthetic resin as the main component. The functional layer 103 may be integrally molded with the base material layer 101 during extrusion molding of the base material resin forming the base material layer 101, or may be molded separately using a UV-curable resin or the like after molding the base material layer 101.

The linear structures 106 provided on the functional layer 103 (the first surface 101a of the light-diffusing sheet 43) so as to extend in a predetermined direction may be, for example, stripe-form prisms (triangular prisms). The lower limit of the thickness of the functional layer 103 (the height from the front surface (the first surface 101a) of the base material layer 101 to the apex of the prisms forming the linear structures 106) may be, for example, around 5 µm, and more preferably around 10 µm. The upper limit of the thickness of the functional layer 103 may be around 200 µm, and more preferably around 100 µm. The lower limit of the pitch of the linear structures 106 may be, for example, around 10 µm, and more preferably around 20 µm. The upper limit of the pitch of the linear structures 106 may be, for example, around 200 µm, and more preferably around 100 µm. The lower limit of the refractive index of the prisms forming the linear structures 106 may be, for example, 1.5, or more preferably 1.55, and the upper limit of the refractive index may be, for example, 1.7.

As shown in FIG. 19, when the plurality of recesses 105 are arranged in a two-dimensional matrix pattern, the linear structures 106 may be extended along one of the arrangement directions (in other words, the extension direction of the ridge lines 111 (see FIG. 6)) (see (a) of FIG. 19), or the extension direction of the linear structures 106 may intersect this arrangement direction (see (b) of FIG. 19). When the arrangement direction of the recesses 105 and the extension direction of the linear structures 106 intersect, the intersection angle may be, for example, 30° or more and 60° or less, and preferably 40° or more and 50° or less. Note that FIG. 19 is a plan view showing a portion of the light-diffusing sheet 43 as seen from the side of the recesses 105 (the light-diffusing layer 102 side).

When a plurality of light-diffusing sheets 43 are stacked and used in the backlight unit 40, the extension direction of the linear structures 106 on one light-diffusing sheet 43 and the extension direction of the linear structures 106 on the other light-diffusing sheet 43 may be aligned with each other or intersect each other.

In the light-diffusing sheet 43 shown in FIG. 17 or FIG. 18, stripe-form prisms are provided as the plurality of linear structures 106, but as long as the linear structures 106 include convex bodies extending in a predetermined direction on the functional layer 103 (the first surface 101a of the light-diffusing sheet 43), there are no particular limitations thereon. For example, as shown in FIG. 20, the plurality of linear structures 106 may form a hairline ((a) in FIG. 20), a lenticular ((b) in FIG. 20), a diffraction grating ((c) in FIG. 20), or the like. FIG. 20 shows variations in the cross-sectional configuration of the functional layer 103 within the cross-sectional configuration of the light-diffusing sheet 43 shown in FIG. 17 or FIG. 18. The hairline forming the linear structures 106 may be, for example, elongated folds created by polishing the surface of the base material layer 101 in a single direction. The lenticular forming the linear structures 106 may be, for example, fine, elongated, kamaboko-shaped convex lens bodies provided on the surface of the base material layer 101. The diffraction grating forming the linear structures 106 may be, for example, a grating pattern composed of linear protrusions and recesses that are apposed periodically on the surface of the base material layer 101. Depending on the type of the linear structures 106, the functional layer 103 exhibits various optical functions, such as diffusion, light collection, and diffraction.

Furthermore, when prisms are provided as the linear structures 106, the height of the prisms may be periodically varied along the vertical direction. That is, the apex (ridge line) of the prisms forming the linear structures 106 may be raised and lowered in the vertical direction so as to form a wave shape. The width of the prisms may also be varied together with the height of the prisms. More specifically, the width of the prisms may be increased in locations where the height of the prism is high, and the width of the prisms may be reduced in locations where the height of the prism is low. Moreover, the height and the iteration period of the peaks repeatedly appearing on the prism ridge lines may be the same. By changing the height of the prisms as described above, the area of contact between the prisms and another overlapped light-diffusing sheet 43 can be reduced, thereby reducing contamination by foreign matter, scratches due to contact, and the visibility of defects to the user.

Furthermore, when prisms are provided as the linear structures 106, the prisms may be extended in a predetermined direction while periodically meandering in a horizontal direction. More specifically, the arrangement of the prism ridge lines may be formed so as to meander periodically without changing the shape (the height, pitch, and apex angle) of the prisms. In other words, when the first surface 101a of the light-diffusing sheet 43 is viewed from the front, the prisms forming the linear structures 106 may extend in a wave shape. Thus, the occurrence of an interference pattern due to the combination of the inverted pyramid-shaped recesses 105 and the prisms forming the linear structures 106 can be suppressed.

Results of evaluating the brightness and brightness uniformity of the optical sheet stack 10 using the light-diffusing sheet 43 shown in FIG. 17 or FIG. 18 will be described below. The brightness and brightness uniformity were evaluated with the backlight configuration shown in FIG. 2 or FIG. 3.

More specifically, an LED array in which blue LED elements are arranged in a square array (with a pitch of 2 mm × 2 mm) was used as the plurality of light sources 42.

Two types of sheets were used as the light-diffusing sheet 43 according to the embodiment described above, namely the sample B described above (in which a matte surface was used as the first surface 101a of a polycarbonate sheet having a thickness of 112 µm, and the inverted pyramid-shaped recesses 105 having a depth of 50 µm and an apex angle of 90° were arranged on the second surface 102a in a two-dimensional matrix pattern at a pitch of 100 µm), and a sample B' manufactured by hot-pressing a sheet having the same shape as the sample B at a transfer rate of 100%, and three types of sheets, namely samples C, D, and E described below, were used as the light-diffusing sheet 43 according to the modification.

The sample C was obtained by providing the light-diffusing layer 102 (the inverted pyramid-shaped recesses 105) and the functional layer 103 (the linear structures 106 formed from stripe-form prisms) using a UV-curable resin on the base material layer 101 having a thickness of 77 µm and containing PET (polyethylene terephthalate) as the main component. In the sample C, the recesses 105 having a depth of 20 µm and an apex angle of 90° were arranged in a two-dimensional matrix pattern on the second surface 102a at a pitch of 40 µm, and the linear structures (prisms) 106 having a height of 12 µm and an apex angle of 90° were arranged on the first surface 101a at a pitch of 24 µm. The angle of intersection between the arrangement direction of the recesses 105 and the extension direction of the linear structure 106 was set to 45°.

The sample D was obtained by providing the light-diffusing layer 102 (the inverted pyramid-shaped recesses 105) and the functional layer 103 (the linear structures 106 formed from stripe-form prisms) by hot-pressing at a transfer rate of 100% on the base material layer 101 having a thickness of 110 µm and containing PC (polycarbonate) as the main component. In the sample D, the recesses 105 having a depth of 50 µm and an apex angle of 90° were arranged in a two-dimensional matrix pattern on the second surface 102a at a pitch of 100 µm, and the linear structures (prisms) 106 having a height of 25 µm and an apex angle of 90° were arranged on the first surface 101a at a pitch of 50 µm. The angle of intersection between the arrangement direction of the recesses 105 and the extension direction of the linear structures 106 was set to 0°.

The sample E is similar to the sample D except that the thickness of the base material layer 101 was set at 160 µm.

A QD sheet was used as the color conversion sheet 44.

As the first prism sheet 45, prisms having a height of 12 µm and an apex angle of 90° were formed on a PET film having a thickness of 87 µm by shape transfer using a UV-curable resin. As the second prism sheet 46, prisms having the same shape as those of the first prism sheet 45 were formed on a PET film having a thickness of 150 µm by shape transfer using a UV-curable resin. The first prism sheet 45 and the second prism sheet 46 were deployed so that the respective prisms thereof were orthogonal to each other and the prisms of the second prism sheet 46 formed an angle of 0° with the arrangement direction of the light sources 42.

As the upper light-diffusing sheet 47, a bead coating was applied to a PET film having a thickness of 136 µm.

In the configuration described above, the brightness and the brightness uniformity were evaluated in the following manner in a state where a transparent glass plate was placed on the upper light-diffusing sheet 47 to prevent the sheets from floating up. First, using a two-dimensional color brightness meter SR-5000HS, manufactured by Topcon Technohouse Corp., the brightness (cd/m²) upward in a vertical direction (a direction traveling from the LED array toward the glass plate) was measured. Next, an obtained two-dimensional brightness distribution image was corrected for variation in the emission intensity of the individual LEDs, filtering processing was executed to suppress bright spot and dark spot noise caused by foreign matter and the like, and then an average value and a standard deviation were calculated for the brightness of all of the pixels. Finally, the brightness and the brightness uniformity were calculated, with the "brightness" defined as "average value of brightness" and the "brightness uniformity" defined as "average value of brightness/standard deviation of brightness".

Table 1 shows results of evaluating the brightness and the brightness uniformity of the respective samples of the light-diffusing sheet 43 in the backlight configuration shown in FIG. 2 (the configuration in which the color conversion sheet 44 is deployed on the lower side of the light-diffusing sheet 43 (lower QD)) in cases where "the recesses 105 were deployed on the light emission surface (deployment orientation: upper pyramids)" or where "the recesses 105 were deployed on the light entrance surface (deployment orientation: lower pyramids)", and in cases where "the arrangement direction of the recesses 105 was aligned (deployment angle: 0°)" with the arrangement direction of the point light sources 42 or where "the arrangement direction of the recesses 105 intersected at 45° (deployment angle: 45°)" with the arrangement direction of the point light sources 42.

**[Table 1]**

| SAMPLE | DEPLOYMENT ORIENTATION | DEPLOYMENT ANGLE | RELATIVE BRIGHTNESS | RELATIVE UNIFORMITY |
|---|---|---|---|---|
| B | UPPER PYRAMIDS | 0° | 100% | 100% |
| B | UPPER PYRAMIDS | 45° | 102% | 125% |
| C | UPPER PYRAMIDS | 0° | 101% | 18% |
| C | UPPER PYRAMIDS | 45° | 101% | 16% |
| B' | UPPER PYRAMIDS | 0° | 97% | 111% |
| B' | UPPER PYRAMIDS | 45° | 100% | 155% |
| D | UPPER PYRAMIDS | 0° | 101% | 32% |
| D | UPPER PYRAMIDS | 45° | 103% | 38% |
| E | UPPER PYRAMIDS | 0° | 101% | 84% |
| E | UPPER PYRAMIDS | 45° | 103% | 70% |
| B | LOWER PYRAMIDS | 0° | 105% | 20% |
| B | LOWER PYRAMIDS | 45° | 102% | 24% |
| C | LOWER PYRAMIDS | 0° | 102% | 18% |
| C | LOWER PYRAMIDS | 45° | 100% | 26% |
| B' | LOWER PYRAMIDS | 0° | 104% | 28% |
| B' | LOWER PYRAMIDS | 45° | 101% | 42% |
| D | LOWER PYRAMIDS | 0° | 101% | 37% |
| D | LOWER PYRAMIDS | 45° | 103% | 39% |
| E | LOWER PYRAMIDS | 0° | 101% | 113% |
| E | LOWER PYRAMIDS | 45° | 103% | 83% |

Table 2 shows results of evaluating the brightness and the brightness uniformity of the respective samples of the light-diffusing sheet 43 in the backlight configuration shown in FIG. 3 (the configuration in which the color conversion sheet 44 is deployed on the upper side of the light-diffusing sheet 43 (upper QD)) in cases where "the recesses 105 were deployed on the light emission surface (deployment orientation: upper pyramids)" or where "the recesses 105 were deployed on the light entrance surface (deployment orientation: lower pyramids)", and in cases where "the arrangement direction of the recesses 105 was aligned (deployment angle: 0°)" with the arrangement direction of the point light sources 42 or where "the arrangement direction of the recesses 105 intersected at 45° (deployment angle: 45°)" with the arrangement direction of the point light sources 42.

**[Table 2]**

| SAMPLE | DEPLOYMENT ORIENTATION | DEPLOYMENT ANGLE | RELATIVE BRIGHTNESS | RELATIVE UNIFORMITY |
|---|---|---|---|---|
| B | UPPER PYRAMIDS | 0° | 92% | 50% |
| B | UPPER PYRAMIDS | 45° | 91% | 52% |
| C | UPPER PYRAMIDS | 0° | 88% | 30% |
| C | UPPER PYRAMIDS | 45° | 88% | 30% |
| B' | UPPER PYRAMIDS | 0° | 87% | 68% |
| B' | UPPER PYRAMIDS | 45° | 92% | 103% |
| D | UPPER PYRAMIDS | 0° | 90% | 51% |
| D | UPPER PYRAMIDS | 45° | 90% | 54% |
| E | UPPER PYRAMIDS | 0° | 90% | 77% |
| E | UPPER PYRAMIDS | 45° | 90% | 105% |
| B | LOWER PYRAMIDS | 0° | 87% | 52% |
| B | LOWER PYRAMIDS | 45° | 87% | 61% |
| C | LOWER PYRAMIDS | 0° | 89% | 33% |
| C | LOWER PYRAMIDS | 45° | 89% | 31% |
| B' | LOWER PYRAMIDS | 0° | 81% | 80% |
| B' | LOWER PYRAMIDS | 45° | 81% | 118% |
| D | LOWER PYRAMIDS | 0° | 90% | 52% |
| D | LOWER PYRAMIDS | 45° | 90% | 62% |
| E | LOWER PYRAMIDS | 0° | 90% | 83% |
| E | LOWER PYRAMIDS | 45° | 90% | 120% |

Note that the brightness and the brightness uniformity (uniformity) shown on Tables 1 and 2 are relative brightness and relative uniformity with the brightness and the uniformity in a case where the sample B shown on Table 1 (lower QD) is deployed with upper pyramids at a deployment angle of 0° serving as references (100%).

From the results shown in Tables 1 and 2, it was found that in the light-diffusing sheet 43 (samples C, D, E) according to this modification, the configuration (upper QD) in which the color conversion sheet 44 was deployed on the upper side of the light-diffusing sheet 43 generally tended to exhibit a slightly lower brightness and a higher uniformity. Meanwhile, in the configuration (lower QD) in which the color conversion sheet 44 was deployed on the lower side of the light-diffusing sheet 43 the brightness was favorable but the uniformity tended to be low. Further, with regard to samples C and D, a relatively high uniformity was obtained when lower pyramids were deployed at a deployment angle of 45°.

More specifically, from the results shown on Table 1 (lower QD), the brightness was slightly favorable in the samples B and B' when lower pyramids were deployed at a deployment angle of 0°, and in the samples C, D, and E, the deployment orientation and the deployment angle had almost no effect. Further, the uniformity was favorable in the samples B and B' when upper pyramids were deployed at a deployment angle of 45°, favorable in the sample C when lower pyramids were deployed at a deployment angle of 45°, slightly favorable in the sample D when lower pyramids were deployed at a deployment angle of 45°, and favorable in the sample E when lower pyramids were deployed at a deployment angle of 0°.

Meanwhile, from the results shown on Table 2 (upper QD), the brightness was favorable in the sample B when upper pyramids were deployed, while the deployment angle had almost no effect. In the sample B', the brightness was favorable when upper pyramids were deployed at a deployment angle of 45°, in the sample C, the brightness was favorable when lower pyramids were deployed, while the deployment angle had almost no effect, and in the samples D and E, both the deployment orientation and the deployment angle had almost no effect. Furthermore, the uniformity was favorable in the samples B and B' when lower pyramids were deployed at a deployment angle of 45°, favorable in the sample C when lower pyramids were deployed at a deployment angle of 0°, and favorable in the samples D and E when lower pyramids were deployed at a deployment angle of 45°.

### Reference Signs List

- 1: TFT substrate
- 2: CF substrate
- 3: Liquid crystal layer
- 5: Liquid crystal display panel
- 6: First polarizing plate
- 7: Second polarizing plate
- 10: Optical sheet stack
- 40: Backlight unit
- 41: Reflective sheet
- 42: Point light source
- 43: Light-diffusing sheet
- 44: Color conversion sheet
- 45: First prism sheet
- 46: Second prism sheet
- 47: Upper light-diffusing sheet
- 50: Liquid crystal display device
- 50a: Display screen
- 101: Base material layer
- 102: Light-diffusing layer
- 103: Functional layer
- 105: Recess
- 106: Linear structure

## Claims

1. An optical sheet stack incorporated into a backlight unit that guides a light emitted from a plurality of point light sources to a display screen of a liquid crystal display device, the optical sheet stack comprising:
a color conversion sheet, configured to convert a wavelength of the light; and
a plurality of light-diffusing sheets, being stacked between the color conversion sheet and the display screen, and provided with a plurality of recesses having inverted substantially polygonal pyramid shape,
wherein the plurality of recesses in the plurality of light-diffusing sheets have the same deployment surfaces and arrangement directions.

2. The optical sheet stack according to claim 1, wherein
the plurality of point light sources and the plurality of recesses are arranged in a two-dimensional matrix pattern,
the plurality of recesses is provided on light emission surfaces of the plurality of light-diffusing sheets, and
the arrangement direction of the plurality of point light sources intersects with the arrangement direction of the plurality of recesses.

3. The optical sheet stack according to claim 1, wherein
the plurality of point light sources and the plurality of recesses are arranged in a two-dimensional matrix pattern,
the plurality of recesses is provided on light entrance surfaces of the plurality of light-diffusing sheets, and
the arrangement direction of the plurality of point light sources intersects with the arrangement direction of the plurality of recesses.

4. An optical sheet stack incorporated into a backlight unit that guides a light emitted from a plurality of point light sources to a side of a display screen of a liquid crystal display device, the optical sheet stack comprising:
a color conversion sheet, configured to converts a wavelength of the light; and
a plurality of light-diffusing sheets, being stacked between the color conversion sheet and the plurality of point light sources, and provided with a plurality of recesses having inverted substantially polygonal pyramid shape,
wherein the plurality of recesses in the plurality of light-diffusing sheets have the same deployment surfaces and arrangement directions.

5. The optical sheet stack according to claim 4, wherein
the plurality of point light sources and the plurality of recesses are arranged in a two-dimensional matrix pattern,
the plurality of recesses is provided on light entrance surfaces of the plurality of light-diffusing sheets, and
the arrangement direction of the plurality of point light sources intersects with the arrangement direction of the plurality of recesses.

6. The optical sheet stack according to claim 1, wherein
the plurality of point light sources and the plurality of recesses are arranged in a two-dimensional matrix pattern, and
the plurality of recesses is provided on light emission surfaces of the plurality of light-diffusing sheets.

7. The optical sheet stack according to any one of claims 1 to 6, wherein
a brightness enhancing sheet is provided closer to the display screen than the color conversion sheet and the plurality of light-diffusing sheets.

8. The optical sheet stack according to claim 7, wherein
another light-diffusing sheet is provided closer to the display screen than the brightness enhancing sheet.

9. A backlight unit that guides light emitted from a plurality of point light sources to a display screen of a liquid crystal display device, the backlight unit comprising:
the optical sheet stack according to any one of claims 1 to 6, which is provided between the display screen and the plurality of point light sources.

10. The backlight unit according to claim 9, wherein
the plurality of point light sources are blue light sources.

11. A liquid crystal display device, comprising:
the backlight unit according to claim 9; and
a liquid crystal display panel.

12. An information apparatus, comprising:
the liquid crystal display device according to claim 11.
